Europäisches Patentamt

European Patent Office

Office européen des brevets

(19)

(11) **EP 0 960 070 B1**

(12) **FASCICULE DE BREVET EUROPEEN**

(45) Date de publication et mention
de la délivrance du brevet:
**27.06.2001 Bulletin 2001/26**

(21) Numéro de dépôt: **98956945.4**

(22) Date de dépôt: **25.11.1998**

(51) Int Cl.$^7$: **C01G 43/025**, F27B 7/00

(86) Numéro de dépôt international:
**PCT/FR98/02522**

(87) Numéro de publication internationale:
**WO 99/28236 (10.06.1999 Gazette 1999/23)**

(54) **PROCEDE ET DISPOSITIF DE CONVERSION DIRECTE D'HEXAFLUORURE D'URANIUM EN OXYDE D'URANIUM**

VERFAHREN UND VORRICHTUNG ZUR DIREKTEN UMSETZUNG VON URANHEXAFLUORID IN URANOXID

METHOD AND DEVICE FOR DIRECTLY CONVERTING URANIUM HEXAFLUORIDE INTO URANIUM OXIDE

(84) Etats contractants désignés:
**BE DE ES FR GB SE**

(30) Priorité: **28.11.1997 FR 9715016**

(43) Date de publication de la demande:
**01.12.1999 Bulletin 1999/48**

(73) Titulaire: **FRANCO-BELGE DE FABRICATION DE COMBUSTIBLE FBFC**
**92084 Paris La Défense Cedex (FR)**

(72) Inventeur: **FEUGIER, André**
**26300 Chatuzance le Goubet (FR)**

(74) Mandataire: **Fort, Jacques**
**CABINET PLASSERAUD**
**84, rue d'Amsterdam**
**75440 Paris Cedex 09 (FR)**

(56) Documents cités:
**EP-A- 0 148 707          EP-A- 0 230 087**
**WO-A-94/26405           FR-A- 2 310 315**
**US-A- 2 333 948          US-A- 3 845 193**

**Description**

L'invention concerne les procédés et dispositifs de conversion directe d'hexafluorure d'uranium ($UF_6$) en oxyde d'uranium ($U_xO_y$).

La conversion directe par voie sèche de $UF_6$ en oxyde d'uranium est utilisée industriellement depuis longtemps. Les dispositifs pour la mettre en oeuvre (US-A-3,845,193) comprennent généralement, en succession :

- un réacteur muni de moyens d'introduction d'$UF_6$, de vapeur d'eau destiné à provoquer la formation de $UO_2F_2$ par hydrolyse,
- un four tubulaire tournant de pyrohydrolyse destiné à transformer $UO_2F_2$ en oxyde d'uranium, muni de moyens de chauffage et de moyens d'introduction de vapeur d'eau et d'hydrogène à contre-courant, et
- des moyens de conditionnement de la poudre d'oxyde.

Les procédés mis en oeuvre jusqu'ici partaient de l'hypothèse que les réactions mises en oeuvre étaient simples et de la forme :

$$UF_6 + 2H_2O \rightarrow UO_2F_2 + 4HF \text{ dans le réacteur,}$$

$$UO_2F_2 + H_2O \rightarrow UO_3 + 2HF \text{ et } UO_3 + H_2 \rightarrow UO_2 + H_2O \text{ dans le four.}$$

Etant donné la simplicité de ces réactions, on estimait qu'il suffisait de contrôler individuellement la température dans trois zones successives du four tubulaire tournant.

Mais une analyse fine des réactions qui interviennent montre qu'elles sont plus compliquées ; certaines sont endothermiques, alors que d'autres sont exothermiques ; les cinétiques sont différentes.

Il y a dans le four d'abord une réaction de pyrohydrolyse qui est la somme de deux réactions dont la première est très endothermique alors que la seconde est légèrement exothermique :

$$UO_2F_2 + H_2O \rightarrow UO_3 + 2HF \text{ (réaction très endothermique)}$$

$$3UO_3 \rightarrow U_3O_8 + 1/2\ O_2 \text{ (légèrement exothermique)}$$

Ces deux réactions ne sont pas strictement séparées. Au fur et à mesure de sa formation, $UO_3$ tend à passer à l'état de $U_3O_8$, avec une cinétique différente. L'ensemble des deux réactions est fortement endothermique.

La réaction ultérieure de réduction de $U_3O_8$ en $UO_2$ par l'hydrogène comporte elle aussi des intermédiaires que l'on peut schématiser par les transformations suivantes :

$$UO_2 \rightarrow U_3O_{8-x}$$

$$U_3O_{8-x} \rightarrow U_4O_9$$

$$U_4O_9 \rightarrow UO_2$$

Chaque réaction a sa propre énergie d'activation et sa propre enthalpie.

Ces réactions interviennent sous un contre-courant de gaz qui est introduit en aval du four et forme initialement un mélange de vapeur d'eau, généralement introduite à une température d'environ 350°C, et d'hydrogène. Ce mélange se charge, au cours de sa circulation (à contre-courant du mouvement de la poudre), en acide fluorhydrique produit par la réaction.

Le four tubulaire doit être muni de moyens de chauffage. Dans la partie aval de ce four (dans le sens de circulation de la poudre), ces moyens de chauffage doivent porter la température des gaz à une valeur suffisante pour provoquer la réduction en $UO_2$. A l'entrée du four, il est nécessaire d'amener la poudre et les gaz à la température de pyrohydrolyse.

Les inventeurs ont mis en évidence que, si on se limite à régler le chauffage dans trois ou même quatre zones successives du four, l'existence d'une réaction endothermique initiale provoque l'apparition d'un profil de température nuisible à la qualité de la poudre obtenue. La raison en est que dès l'arrivée à la température d'amorçage de la réaction de pyrohydrolyse, le caractère très endothermique de cette réaction qui fait intervenir l'ensemble de la poudre de $UO_2F_2$ provoque, immédiatement en aval, une chute brutale de température dans le four qui peut arrêter temporairement la réaction. En d'autres termes, on trouve successivement le long du four un premier maximum là où s'amorce la pyrohydrolyse, puis une chute de température, et une nouvelle remontée provoquée par la poursuite du chauffage, qui atteint un maximum une fois le fluor éliminé.

La présente invention vise notamment à fournir un procédé permettant d'obtenir un profil de température régulier et ainsi une réaction progressive et sans discontinuité, en vue d'arriver à un produit de qualité constante et bien définie.

Dans ce but, l'invention propose notamment un procédé de conversion directe d'hexafluorure d'uranium en oxyde d'uranium, suivant lequel on injecte de l'hexafluorure d'uranium $UF_6$ et de la vapeur d'eau dans un réacteur et on fait passer la poudre d'$UO_2F_2$ obtenue le long d'un four tubulaire muni de moyens de chauffage, à contre-courant d'une amenée de vapeur d'eau et d'hydrogène, caractérisé en ce qu'on commande indépendamment la quantité de chaleur apportée dans au moins cinq zones successives du four de façon à amener la température des gaz dans une zone d'entrée, dans le sens de circulation de la poudre, à une valeur comprise entre 570°C et 700°C, à provoquer une croissance de la température jusqu'à une valeur maximale comprise entre 730°C et 800°C qui est atteinte dans la troisième zone ou au-delà, et à provoquer une décroissance progressive de température jusqu'à la dernière zone, où on amène par chauffage l'hydrogène et la vapeur d'eau à une température suffisante pour réduire les oxydes supérieurs en $UO_2$.

Le chauffage de la dernière zone n'a pour but que d'amener l'hydrogène et la vapeur d'eau, dans cette zone, à une température suffisante pour achever la réduction à l'état d'$UO_2$.

L'invention propose également un dispositif de conversion directe d'hexafluorure d'uranium en oxyde d'uranium comprenant, en succession :

- un réacteur muni de moyens d'introduction d'$UF_6$ et de vapeur, destiné à provoquer la formation d'$UO_2F_2$ par hydrolyse,
- un four tubulaire tournant de pyrohydrolyse destiné à transformer $UO_2F_2$ en oxyde d'uranium, muni de moyens de chauffage et de moyens d'introduction de vapeur et d'hydrogène à contre-courant,

caractérisé en ce que le four est constitué d'au moins cinq zones successives munies de moyens de chauffage indépendants permettant de les maintenir à des températures différentes, des moyens de mesure de la température dans chaque zone, soit à l'intérieur du four, soit le long de sa paroi et des moyens d'asservissement des températures par commande des moyens de chauffage.

Souvent, on établira, à partir de mesures préalables, un modèle de correspondance entre la température mesurée à l'intérieur du four dans chaque zone, en phase gazeuse, et la température contre la paroi du four et on pourra alors commander des résistances chauffantes dans chaque zone, à partir des températures mesurées le long de la paroi, en tenant compte de la correspondance établie par le modèle et des températures à maintenir dans le four.

Les moyens d'introduction des réactifs dans le four comprennent avantageusement un injecteur vertical à trois buses concentriques reliées respectivement à des arrivées d'$UF_6$, d'azote et de vapeur d'eau.

Les produits gazeux provenant de la réaction ou en excès (HF, $H_2O$, $H_2$, $N_2$) doivent être évacués du réacteur et du four par l'intermédiaire de filtres retenant les matières solides entraînées, et notamment $UO_2F_2$.

Dans un mode avantageux de réalisation, ces filtres sont placés à l'intérieur même de l'enceinte délimitant le réacteur, ce qui garantit leur maintien à une température appropriée, évite la nécessité d'un calorifuge et d'un système de chauffage propres et supprime presque complètement les risques de fuite vers l'extérieur. En règle générale, deux blocs de filtres seront généralement prévus et utilisés en alternance, de façon à permettre le décolmatage du filtre non utilisé par circulation d'azote à contre-courant du sens d'évacuation des gaz de réaction.

Pour maintenir une température homogène dans le réacteur, ce dernier est avantageusement placé dans un caisson de calorifugeage et une circulation d'air à température régulée est maintenue entre la paroi du réacteur et celle du caisson. La circulation d'air peut notamment être assurée par un ventilateur ou une turbine soufflante qui fait passer de l'air à travers une batterie de résistances électriques de chauffage, puis autour du réacteur. La circulation peut être réalisée en circuit fermé. Les filtres contenus dans le caisson sont ainsi eux aussi à une température bien déterminée et uniforme.

Il est important, pour que l'oxyde d'uranium $UO_2$ fourni par le four ait des caractéristiques homogènes, qu'il y ait un brassage énergique de mélange de la poudre d'$UO_2F_2$ avec l'hydrogène et la vapeur d'eau qui circulent à contre-courant. Pour cela, le four tournant contient avantageusement des chicanes régulièrement réparties le long du four, pouvant être constituées par des ailettes vrillées reliant un axe central au fût cylindrique du four ainsi que des barres de relevage disposées à l'intérieur du fût cylindrique.

Chaque zone du four peut être délimitée par une portion d'enveloppe de calorifugeage du four à l'intérieur de laquelle sont réparties plusieurs résistances chauffantes insérables et enlevables par déplacement transversal à la direction du four. Les résistances peuvent par exemple être disposées au-dessus et au-dessous du fût du four. Les températures peuvent être mesurées dans diverses zones à l'aide de thermo-couples insérés par des passages verticaux et/ou horizontaux et se terminant à proximité du fût pour mesurer la température de paroi ou situés dans l'axe du four.

A titre d'exemple, on peut indiquer qu'un four a été réalisé avec six zones successives.

La poudre sort du réacteur à une température qui est généralement de l'ordre de 330°C. Une zone de transition entre le réacteur et le four est démunie de moyens de chauffage. Dans une première zone, les résistantes chauffantes peuvent être réglées pour amener la température à une valeur comprise entre 570°C et 700°C. Dans la pratique, une température de sortie de la première zone entre 650°C et 690°C s'est révélée satisfaisante. Dans une seconde zone, constituant une transition vers le maximum, il faut éviter toute baisse locale de température qui interromprait la réaction. Le risque de chute de température est d'autant plus élevé qu'à l'entrée de cette seconde zone, la presque totalité de la poudre subit la réaction très endothermique. Dans cette seconde zone, on recherchera une croissance progressive de température jusqu'à une température généralement comprise entre 700°C et 800°C. Une température comprise entre 720°C et 760°C a donné de bons résultats.

Le maximum sera atteint dans la troisième zone ou la quatrième.

Dans la partie située en aval du maximum, où s'effectue uniquement une réduction, le chauffage est tel que la température diminue de façon régulière jusqu'à l'entrée de la vapeur d'eau et de l'hydrogène.

Il est préférable de chauffer de façon énergique dès la sixième zone, de façon à amener l'hydrogène à la température de réduction des oxydes supérieurs dès la frontière entre la cinquième et la sixième zone, et cela avec une baisse progressive de la température depuis le maximum.

Ces résultats peuvent être atteints par un choix approprié de températures de consigne dans chaque zone et commande individuelle de chaque groupe de resistances affecté à une zone.

Un avantage supplémentaire d'un tel four est qu'il permet d'adapter aisément les paramètres de fonctionnement à la nature précise de l'oxyde d'uranium recherché. Dans certains cas en effet, on peut chercher à obtenir non pas de l'$UO_2$ stoechiométrique, mais un oxyde de la forme $UO_2+x$, jusqu'à une valeur proche de $U_3O_8$.

Le four peut également être utilisé sans difficulté pour d'autres types de traitement, par exemple pour retraiter de l'$UO_2$ ayant une teneur en fluor excessive, pour ramener de l'$UO_{2+x}$, voire même $U_3O_8$, à l'état d'$UO_2$ stoechiométrique.

En utilisant un profil de température avec un maximum plus élevé, il est possible de réduire la surface spécifique de l'$UO_2$ obtenu, ce qui est souhaitable pour certaines applications, par exemple pour rendre plus stables des oxydes d'uranium dont la surface spécifique excessive les rend pyrophoriques. Dans ces derniers cas, le produit pulvérulent à retraiter est introduit dans le réacteur par des moyens autres que l'injecteur, dont la buse centrale au moins reste inutilisée.

Des joints d'étanchéité sont prévus entre le four, qui constitue une partie tournante, et d'une part le réacteur, d'autre part une unité de conditionnement de poudre d'oxyde d'uranium, destinée à refroidir et à stocker cette poudre. Pour faciliter le remplacement des joints, il est avantageux de monter le réacteur et l'unité de conditionnement sur des rails de guidage portés par un châssis fixe, de façon à permettre de les écarter du four pour fournir un accès aisé aux joints.

Le débit d'hexafluorure d'uranium est avantageusement modulable dans une large plage, par exemple de dix à cent cinquante kilogrammes par heure, ainsi que le débit de vapeur d'eau. Les conditions recherchées sont telles que la réaction d'hydrolyse se produise au-delà de l'extrémité de la buse d'injection, à une température comprise entre 150 et 500°C.

Les caractéristiques ci-dessus ainsi que d'autres apparaîtront mieux à la lecture de la description qui suit d'un mode particulier de réalisation, donné à titre d'exemple non limitatif. La description se réfère aux dessins qui l'accompagnent, dans lesquels :

- la figure 1 est une vue de côté de l'ensemble d'un dispositif suivant l'invention, exception faite de l'unité de conditionnement ;
- les figures 2a et 2b, qui se raccordent suivant la ligne II-II, montrent deux portions successives du dispositif, en coupe suivant un plan vertical médian ;
- la figure 3 montre l'injecteur équipant le réacteur du dispositif de la figure 1, la partie gauche à partir de la ligne 3 étant une coupe suivant un plan vertical, et la partie droite à partir de la ligne 3 étant une coupe dans un plan horizontal ;
- la figure 4 est une vue de dessus destinée à montrer la disposition des deux blocs de filtres internes du réacteur ;
- la figure 5 est un schéma de principe en perspective destiné à montrer les liaisons entre les blocs de filtres internes et les filtres de sécurité ;
- la figure 6 est une vue en coupe horizontale à travers une fraction du four, destinée à montrer une disposition possible de cannes chauffantes ;
- la figure 7 est une vue en coupe suivant l'axe du four (ligne VII - VII de la figure 6), destinée à montrer une répartition possible de thermo-couples de mesure ;
- la figure 8 montre un profil représentatif de température des gaz dans le four.

Le dispositif de conversion peut être regardé comme comprenant, de l'amont à l'aval depuis l'amenée d'UF$_6$ jusqu'à la sortie de l'oxyde d'uranium:

- une unité de vaporisation d'UF$_6$, non représentée car pouvant avoir une constitution classique,
- un réacteur 12, où on provoque la réaction d'hydrolyse d'UF$_6$ par la vapeur d'eau, comportant des moyens d'introduction des réactifs sous forme gazeuse et une cuve 14 de recueil d' UO$_2$F$_2$, contenant une vis sans fin 18 d'entraînement,
- un four tubulaire 16, présentant une pente faible, dans lequel a lieu la transformation d' UO$_2$F$_2$ en oxyde d'uranium.

A ces composants s'ajoutent, dans le mode de réalisation illustré:

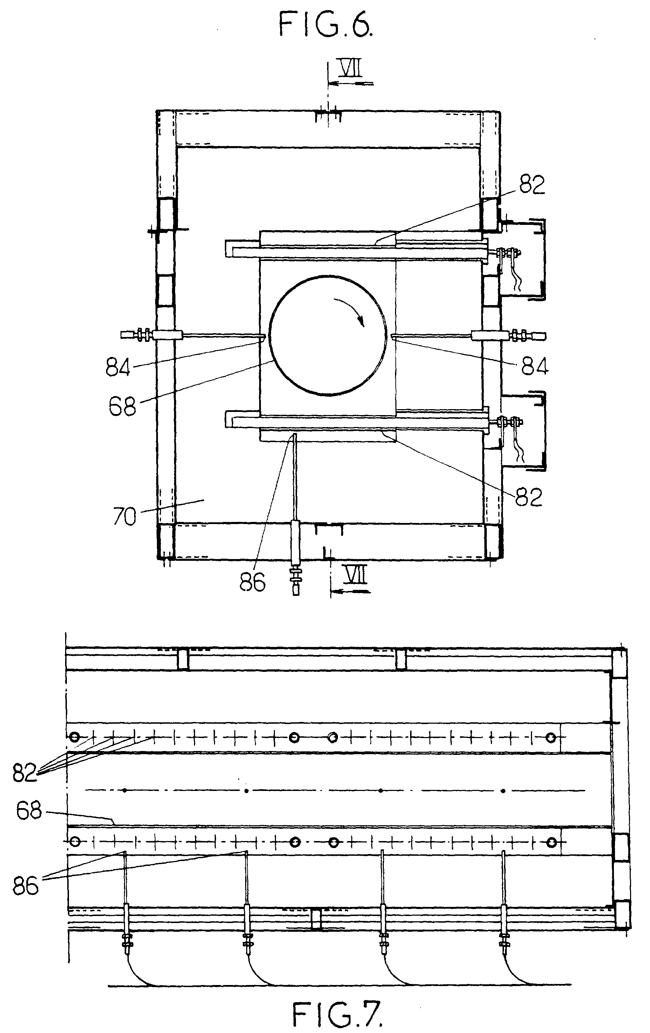

- un jeu de filtres de sécurité 66 (figure 6), en série avec des filtres internes 60 contenus dans le réacteur 12, placés sur le trajet d'évacuation des gaz de réaction ;
- des moyens de recyclage de poudre d'oxyde d'uranium jugée non conforme aux spécifications.

Ces composants seront successivement décrits.

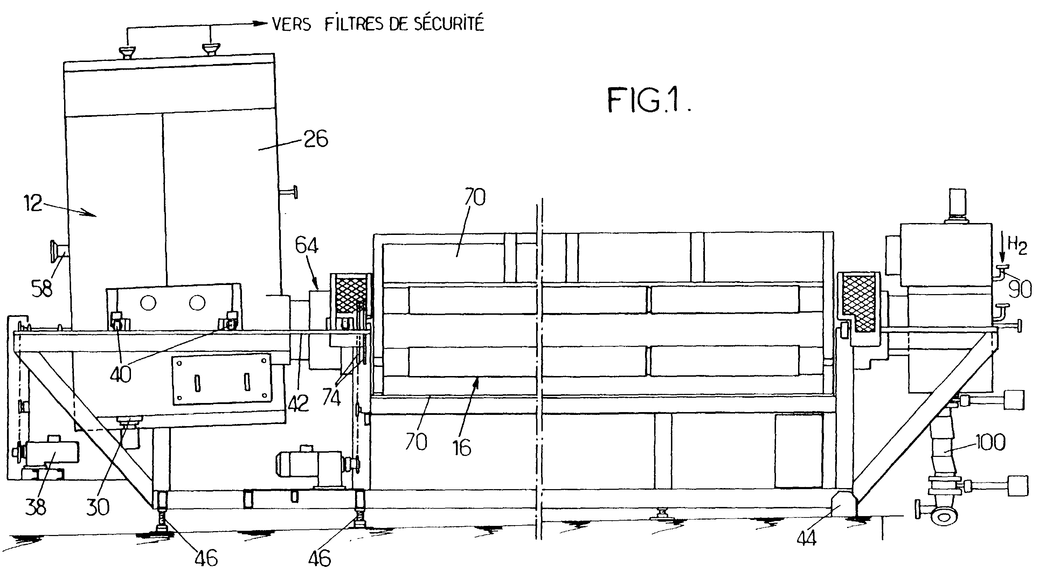

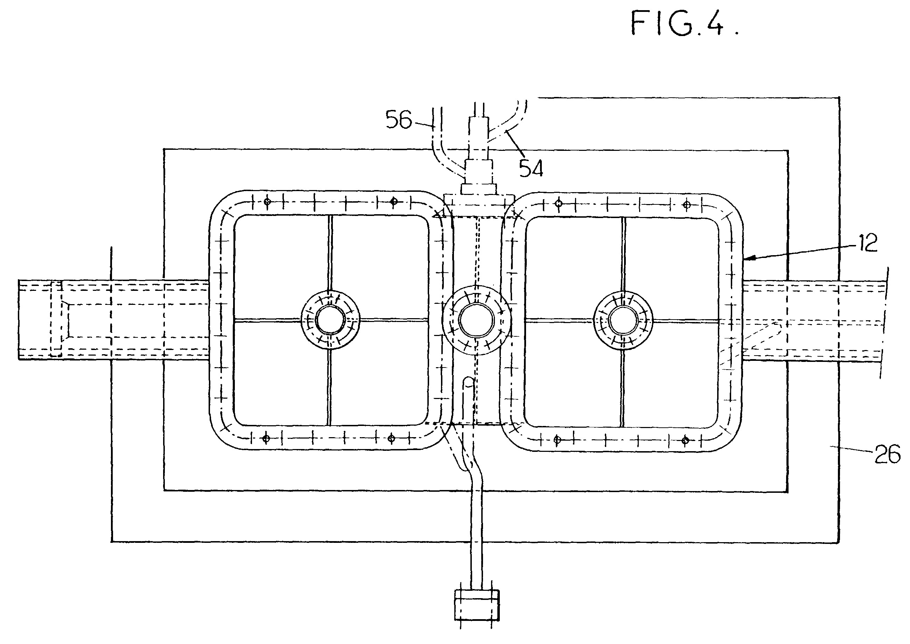

Le réacteur 12 (figures 1, 2A, 3 et 4) est contenu dans un caisson chauffant 26, constitué en matériau thermiquement isolant. A l'intérieur de ce caisson sont placées des résistances chauffantes 28. Dans le mode de réalisation illustré, elles sont placées, en deux rangées superposées, à la partie inférieure du caisson. La chambre verticale 32 du réacteur, constituée en un alliage inoxydable tel que le Monel ou l'Inconel, est séparée du caisson par un espace de circulation. Un ventilateur ou soufflante 30 permet de faire circuler de l'air dans le caisson autour du réacteur, en le faisant passer sur les résistances 28. La puissance des résistances chauffantes est régulée de façon à maintenir dans le réacteur une température appropriée, supérieure à 100°C.

Dans la pratique, les résistances sont prévues pour dissiper une puissance telle que la paroi soit maintenue à une température comprise entre 150°C et 350°C.

La chambre 32, dans laquelle s'effectue l'hydrolyse, est fixée à une cuve inférieure 14 dont le fond est en pente vers une tubulure 36 de sortie vers le four 16. Dans le fond de la cuve est montée une vis sans fin 18 d'amenée de poudre dans le four, dont l'arbre est entraîné par un moteur électrique externe 38 indépendant de celui de mise en rotation du tube.

Le réacteur et son caisson chauffant sont munis de galets 40 (figure 1) leur permettant de se déplacer légèrement le long de rails 42 appartenant à un châssis sur lequel sont montés les différents moteurs électriques d'entraînement. Ce châssis est lui-même monté sur un socle par l'intermédiaire d'une articulation 44 lui permettant de pivoter autour d'un axe transversal à l'axe du four. Ainsi la pente du fond de la cuve, ainsi que celle du four, peut être ajustée, généralement environ à 2,5 %, aux moyens de vérins tels que 46.

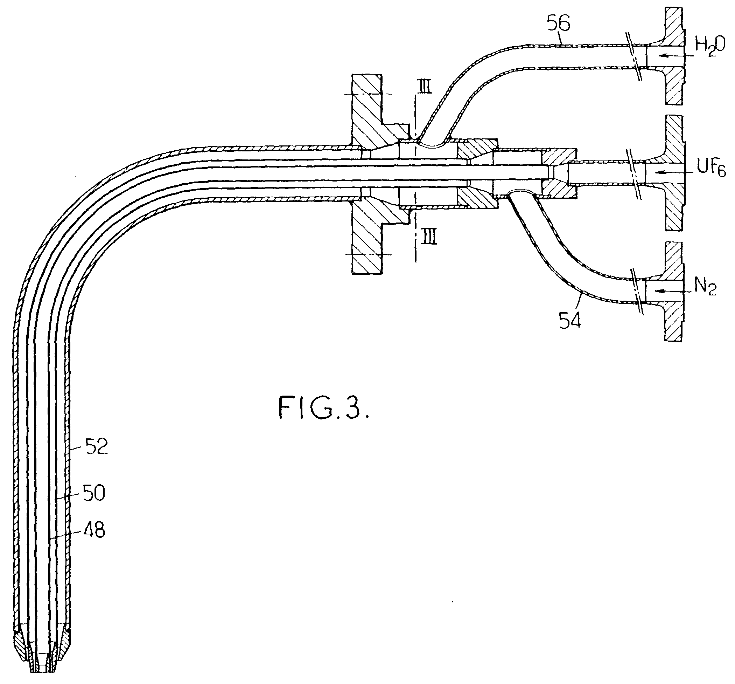

Les moyens d'introduction des réactifs dans le four comprennent un injecteur à trois buses concentriques, permettant de séparer les jets d'UF$_6$ et de vapeur d'eau par une nappe d'azote. L'injecteur montré en figure 3 comporte une canne coudée à trois tubes concentriques, terminés par les buses d'injection respectives. Ces trois tubes traversent la paroi de la chambre et le caisson chauffant et sont munis à l'extérieur de branchements respectifs, placés éventuellement dans un même plan horizontal. Le tube interne 48 est relié à l'unité de vaporisation. Le tube médian 50 est relié par une boîte de raccordement à un branchement latéral 54 d'alimentation en azote. Le tube externe 52 est relié à une alimentation en vapeur d'eau par un branchement latéral 56.

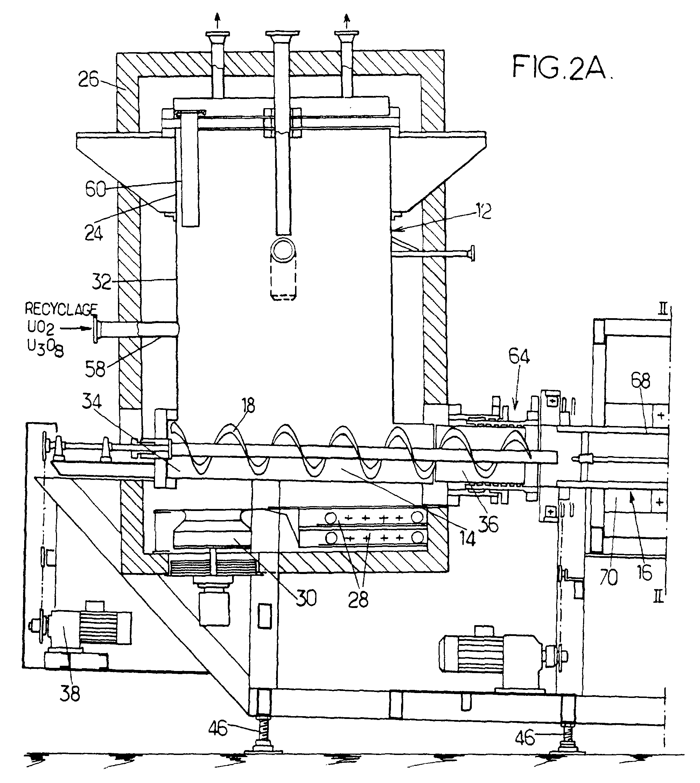

Une buse radiale 58, débouchant dans le réacteur, peut être prévue si on souhaite utiliser le four pour recycler de l'oxyde d'uranium (figures 1 et 2A).

Du fait que l'injection s'effectue verticalement, de haut en bas, au centre du réacteur, avec une séparation initiale de l'UF$_6$ et de la vapeur d'eau, il se produit un panache donnant naissance à de l'UO$_2$F$_2$ sous forme de fines particules au-delà des buses. Ce panache, dirigé vers le fond, est mis en circulation dans l'enceinte du réacteur par le contre-courant de gaz provenant du four. Les fines particules tombent par gravité sur le fond, d'où elles sont véhiculées par la vis sans fin 18 vers le four.

La chambre du réacteur contient, à sa partie supérieure, des filtres de retenue d'oxyfluorure d'uranium. Ces filtres 60, dont un seul est représenté sur la figure 2A, sont de préférence en métal fritté. Ils sont entièrement contenus dans le réacteur, ce qui apporte plusieurs avantages. Les filtres sont maintenus à la température appropriée, sans avoir besoin de système de chauffage propre. Les risques de fuite vers l'extérieur de l'installation sont réduits, l'étanchéité du système étant assuré par des joints faciles à mettre en place, disposés eux-mêmes à l'intérieur d'une culasse. Ainsi, une rupture de filtre ne peut pas entraîner une contamination en acide fluorhydrique ou en produit uranifère du local qui contient le dispositif.

Les filtres 60 sont traversés par un courant gazeux constitué notamment d'azote et des réactifs gazeux en excès, susceptibles d'entraîner des particules d'$UO_2F_2$ ou même d'oxyde d'uranium. Ces particules sont retenues par les filtres qui se colmatent progressivement. En conséquence, les filtres 60 sont décolmatés alternativement.

La figure 6 montre schématiquement un montage permettant d'effectuer ce décolmatage. La canalisation de liaison de chaque bloc de filtres avec l'extérieur est munie d'une vanne à trois voies 62 permettant à volonté soit de diriger le gaz ayant traversé le filtre vers une installation de traitement destinée à condenser l'acide fluorhydrique et à laver les incondensables, soit au contraire d'injecter dans le filtre de l'azote chaud sous pression qui revient vers le réacteur.

Pour augmenter encore la sécurité en cas de rupture d'un filtre 60, les vannes 62 ne sont pas directement reliées à une installation de traitement. Des filtres de sécurité 66, également en métal fritté, sont disposés à proximité du réacteur et maintenus à une température qui évite toute condensation des fluides agressifs et assurent un confinement absolu de la matière uranifère en cas de rupture des filtres internes. Ces filtres n'ont pas besoin d'être munis de moyens de décolmatage, puisqu'en fonctionnement normal ils ne reçoivent pas de poudre. D'une part ils évitent une pollution accidentelle de l'installation de traitement des gaz. D'autre part, ils permettent de déceler les incidents par comparaison des pressions mesurées en P1 dans la chambre, en P2 dans la conduite reliant les filtres 60 aux filtres de sécurité 66, en P3 en aval des filtres de sécurité 66.

Une différence de pression excessive entre P2 et P3 traduit un colmatage des filtres de sécurité 66 par de l'$UO_2F_2$, suite à la rupture ou à la défaillance d'un ou plusieurs filtres internes 60. Un tel défaut peut être indiqué par des moyens de mesure reliés à des sondes en P1, P2 et P3.

La présence des filtres de sécurité interdit toute arrivée de particule contenant de l'uranium vers l'installation de traitement, dont la géométrie n'est généralement pas prévue pour admettre sans risques de criticité la présence d'uranium enrichi en solution acide.

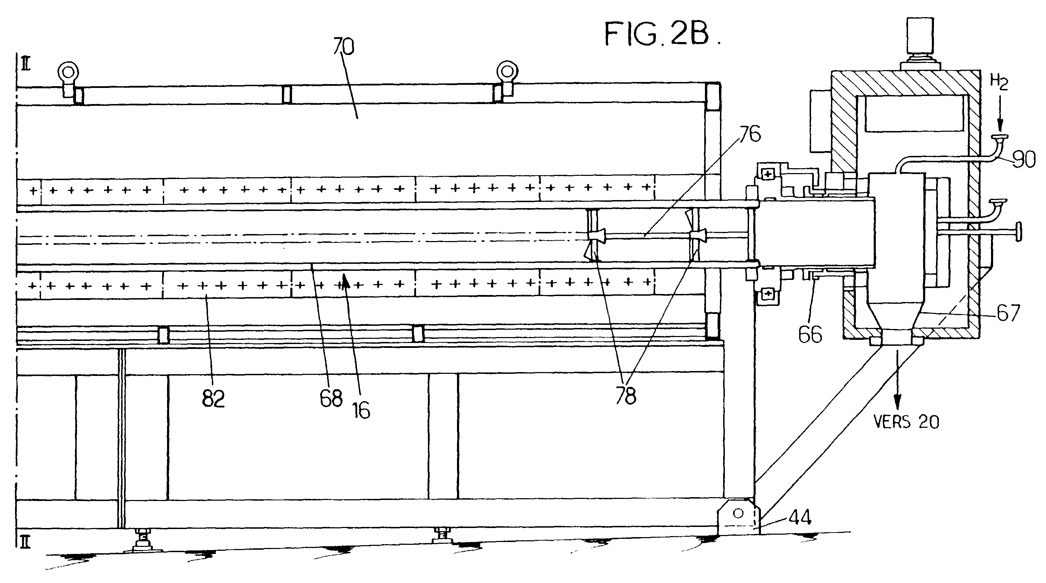

Le four 16 (figure 2A et 2B) est relié, par une boîte à joints 64, au réacteur 12.

Le four comprend un fût rotatif 68 contenu dans un ensemble de calorifugeage 70. Ce fût rotatif est fixé à des manchons d'extrémité qui tournent dans des roulements. Le manchon est solidaire de poulies 74 entraînées par un ou deux moteurs électriques par l'intermédiaire de courroies. Des chicanes sont réparties le long du four. Elles sont constituées, dans le mode de réalisation illustré, par des ailettes 78 reliant le fût à l'arbre central 76.

Le fût, constitué en alliage résistant à l'acide fluorhydrique tel que l'un de ceux connus sous le nom de "Inconel", est entouré par un calorifugeage 70 contenant des moyens de chauffage 82 et des moyens 84 et 86 de mesure de température de la paroi. D'autres moyens de mesure de température dans l'axe de chacune des zones successives du four pourront être constitués par une canne fixe pénétrant dans le four depuis l'aval.

Le calorifuge peut être continu, les zones étant individualisées par le fait que les résistances chauffantes d'une même zone sont commandées simultanément et commandées uniquement en fonction de la température dans la zone correspondante, mesurée contre la paroi et/ou dans l'axe. Il est possible, par établissement d'un modèle au cours d'essais préalables, de relier la température dans l'axe à la température au long de la paroi. Il est également possible d'établir, à partir d'essais préalables, un modèle donnant la température au sein de la poudre qui circule dans le four en fonction des températures mesurées à la paroi ou dans l'axe, et cela pour différents débits de poudre.

Dans le mode de réalisation montré sur les figures 2A et 2B, six zones successives sont prévues. Elles comportent chacune des moyens de chauffage et de régulation et des moyens de mesure de température indépendante.

Ce fractionnement en plusieurs tronçons relativement indépendants permet de tenir compte de la constatation que les réactions de pyrohydrolyse et de réduction sont complexes.

Par exemple la réaction de pyrohydrolyse :

$$UO_2F_2 + H_2O \rightarrow UO_3O_8$$

est en fait la somme de deux réactions :

$$UO_2F_2 + H_2O \rightarrow UO_3 + 2HF$$

$$3UO_3 \rightarrow U_3O_8 + 1/2 \, O_2$$

Ces réactions dépendent des températures. La réaction de réduction de $U_3O_8$ en UO2 comporte de son côté le passage par des intermédiaires que l'on peut schématiser comme suit :

$$U_3O_8 \to U_3O_{8-x}$$

$$U_3O_{8-x} \to U_4O_9$$

$$U_4O_9 \to UO_2.$$

Chaque réaction a sa propre énergie d'activation et sa propre enthalpie. Le découpage du four en au moins cinq zones, (six dans le mode de réalisation représenté), permet une adaptation aux caractéristiques de chaque réaction.

Pour des raisons de facilité de fabrication, les zones peuvent avoir toutes la même longueur.

Grâce à ce fractionnement, la teneur en fluor peut être ramenée à une valeur ne dépassant pas quelques dizaines de ppm dès la fin de la troisième zone.

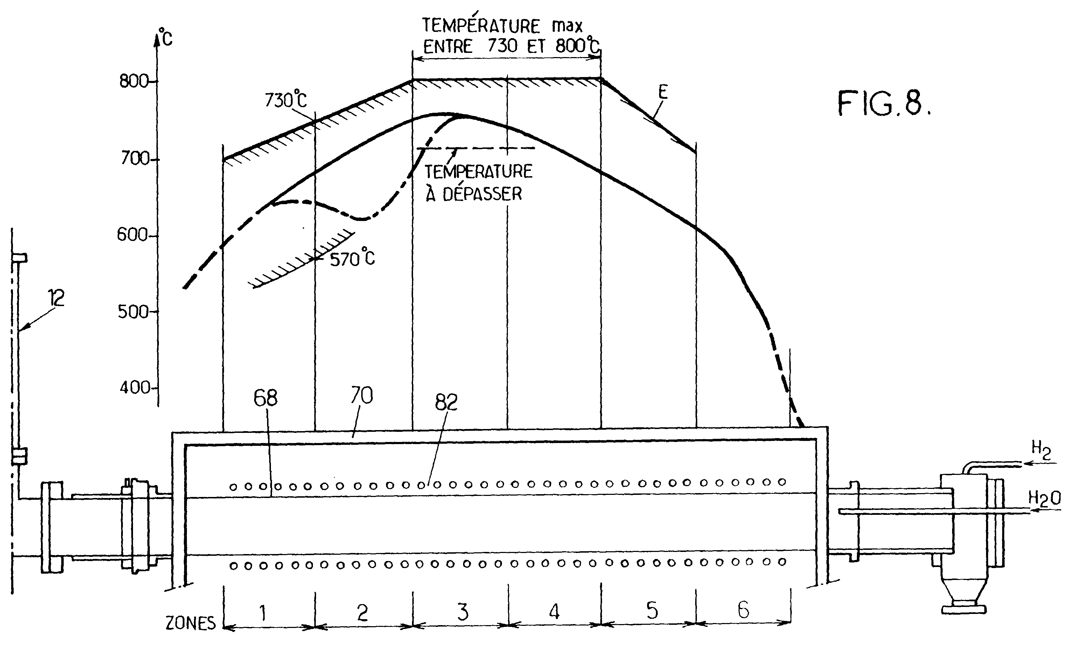

Les moyens de chauffage peuvent avoir la constitution montrée en figure 6 et comporter des cannes de chauffage par résistance électrique 82 introduites dans l'espace qui sépare le fût 68 du calorifuge des canaux prévus horizontalement à travers le calorifugeage. Dans le cas montré en figure 7, des résistances sont prévues au-dessus du fût, et d'autres au-dessous. Les moyens de mesure de température peuvent comporter un premier jeu 84 de thermo-couples amenés dans l'ambiance du four, à proximité du fût, par des passages horizontaux. Des thermo-couples supplémentaires 86 (figure 7 ou 8) peuvent être prévus au-dessous du four, à proximité du jeu de cannes chauffantes 82, pour détecter toute surchauffe éventuelle. La disposition qui vient d'être décrite n'est cependant nullement obligatoire ou limitative.

Le four est muni de moyens destinés à éviter la formation d'agglomérat contre la paroi interne du fût. Ces moyens sont constitués par des organes qui viennent frapper contre la paroi du fût, pour provoquer un choc de décollement des amas. Afin d'éviter que les organes ne frappent toujours au même emplacement du fût, ils sont commandés par des moyens non synchronisés avec la rotation du fût et viennent frapper sur des couronnes métalliques frittées sur le tube.

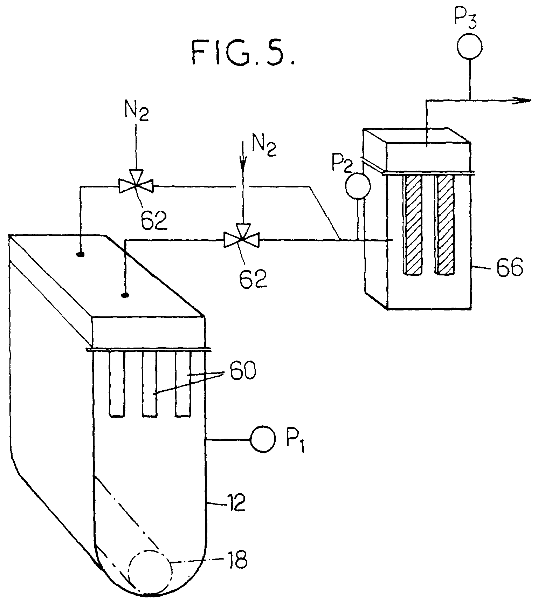

Les moyens de conditionnement de la poudre d'oxyde peuvent avoir la constitution montrée schématiquement en figure 5. Ils comportent alors un sas d'entrée 100 de séparation entre la zone chaude du four et une zone froide qui évite le passage de vapeur dans des pots de refroidissement qui reçoivent l'oxyde.

Le dispositif de sortie de poudre comporte, en amont du sas de transfert vers les moyens de conditionnement, une arrivée d'hydrogène 90 qui parcourt le four à contre-courant ; l'hydrogène résiduel est évacué avec l'acide fluorhydrique au travers des filtres 60.

La courbe en traits pleins de la figure 8 montre, à titre d'exemple, une variation progressive de température que permet d'obtenir l'invention. En amont de la première zone, les gaz chauds commencent à augmenter la température de $UO_2F_2$ qui arrive généralement à 500°C environ. On voit qu'une température des gaz proche de 700°C est atteinte dès la fin de la première zone et qu'elle croît ensuite régulièrement jusqu'à 750°C environ, au milieu de la troisième zone. Grâce à la régulation dans la seconde zone, où l'apport de chaleur peut être particulièrement important, on évite la chute de température, indiquée par une ligne en traits mixtes, difficilement évitable dans les appareils antérieurs. Au-delà de la troisième zone, la température est maintenue aux valeurs requises pour le passage progressif à l'état d'$UO_2$. Dans la dernière zone, les gaz entrants ($H_2$ et $H_2O$) sont amenés à une température de gaz de 600°C environ, permettant la réduction. On voit que la température reste partout comprise dans l'enveloppe E.

Les températures seront généralement mesurées au milieu de chaque zone, comme indiqué par des points sur la figure 8.

## Revendications

1. Procédé de conversion directe d'hexafluorure d'uranium en oxyde d'uranium, suivant lequel on injecte de l'hexafluorure d'uranium $UF_6$ et de la vapeur d'eau dans un réacteur et on fait passer la poudre d'$UO_2F_2$ obtenue dans et le long d'un four tubulaire muni de moyens de chauffage, à contre-courant d'une amenée de vapeur d'eau et d'hydrogène, suivant lequel on commande indépendamment la quantité de chaleur apportée dans au moins cinq zones successives du four de façon à amener la température des gaz dans une zone d'entrée dans le sens de circulation de la poudre à une valeur comprise entre 570°C et 700°C, à provoquer une croissance de la température jusqu'à une valeur maximale comprise entre 730°C et 800°C qui est atteinte dans la troisième zone ou au-delà et à provoquer une décroissance progressive de température jusqu'à la dernière zone, où on amène par chauffage l'hydrogène à une température suffisante pour réduire les oxydes supérieurs en $UO_2$.

**2.** Procédé selon la revendication 1, caractérisé en ce que l'on injecte de l'azote concentriquement entre l'hexafluorure et la vapeur d'eau et en ce qu'on ajuste les débits relatifs d'hexafluorure d'uranium, d'azote et de vapeur d'eau de façon que la réaction de formation d'$UO_2F_2$ se produise au-delà de l'extrémité d'une buse d'injection centrale d'hexafluorure.

**3.** Procédé selon la revendication 1 ou 2, caractérisé en ce qu'on fractionne le four en six zones successives et en ce qu'on amène la température à sa valeur maximale dans la troisième zone dans le sens de circulation de la poudre.

**4.** Procédé selon la revendication 1, 2 ou 3, caractérisé par une étape préliminaire d'établissement d'un modèle de correspondance entre la température mesurée dans chaque zone à l'intérieur du four, généralement dans l'axe, et la température correspondante contre la paroi du four, la quantité de chaleur apportée par des résistances électriques dans les zones successives étant alors commandée pour asservir les températures mesurées contre la paroi à des valeurs permettant de respecter le profil de température recherché dans le four, à partir du modèle.

**5.** Procédé selon la revendication 1 ou 2, caractérisé en ce qu'on maintient dans lesdites zones un profil de température tel que $UO_2F_2$ soit transformé en $UO_3$ au plus tard à la sortie de la seconde zone à partir du réacteur.

**6.** Dispositif de conversion directe d'hexafluorure d'uranium en oxyde d'uranium, comprenant, en succession :

- un réacteur muni de moyens d'introduction d'$UF_6$, de vapeur d'eau et d'azote destiné à provoquer la formation de $UO_2F_2$ par hydrolyse,
- un four tubulaire tournant de pyrohydrolyse destiné à transformer $UO_2F_2$ en oxyde d'uranium, muni de moyens de chauffage,

caractérisé en ce que le four est constitué d'au moins cinq zones successives munies de moyens de chauffage indépendants, permettant de maintenir les zones du four à des températures différentes, des moyens de mesure de température dans chaque zone et des moyens d'asservissement des températures par commande des moyens de chauffage.

**7.** Dispositif selon la revendication 6, caractérisé en ce que les moyens d'introduction comprennent un injecteur à trois buses concentriques reliées respectivement à des arrivées d'$UF_6$, d'azote et de vapeur d'eau, l'azote étant injecté entre l'$UF_6$ et la vapeur d'eau.

**8.** Dispositif selon la revendication 6 ou 7, caractérisé en ce que le réacteur (12) contient des blocs de filtres (60) de retenue de matière solide, reliés à une évacuation vers une installation de traitement extérieur.

**9.** Dispositif selon la revendication 8, caractérisé en ce que lesdits blocs de filtres (60) sont munis de moyens de décolmatage alterné par circulation d'azote à contre courant.

**10.** Dispositif selon la revendication 8 ou 9, caractérisé en ce que des filtres de sécurité (66) sont interposés entre les filtres (60) placés dans le réacteur et l'installation de traitement des gaz.

**11.** Dispositif selon la revendication 10, caractérisé par des moyens de mesure de pression en amont et en aval des filtres de sécurité, reliés à des moyens de détection d'endommagement des filtres contenus dans le réacteur.

**12.** Dispositif selon l'une quelconque des revendications 7 à 11, caractérisé en ce que le réacteur est placé dans un caisson (26) de calorifugeage et en ce que des moyens de ventilation (30) sont prévus pour faire circuler de l'air dans l'espace compris entre la paroi du réacteur et celle du caisson et sur des résistances chauffantes (28) destinées à commander la température du réacteur.

**13.** Dispositif selon la revendication 12, caractérisé en ce que le fût du four est muni de moyens de chauffage constitués par des résistances chauffantes (82) insérables et enlevables à travers le calorifugeage par déplacement transversal à l'axe du four, placées par exemple au-dessus et au-dessous du fût.

**14.** Dispositif selon l'une quelconque des revendications 6 à 12, caractérisé en ce que le réacteur et des moyens de conditionnement de la poudre d'oxyde sont montés sur des moyens permettant de les déplacer le long de l'axe du four et sont reliés au four par des moyens d'étanchéité comportant des joints accessibles après déplacement du réacteur ou déplacement des moyens de conditionnement.

**Claims**

**1.** A method of directly converting uranium hexafluoride into uranium oxide, in which uranium hexafluoride $UF_6$ and steam are injected into a reactor and the resulting $UO_2F_2$ powder is passed into and along a tubular kiln provided with heater means, as a counterflow to a feed of steam and hydrogen, and in which the quantity of heat delivered to at least five successive zones of the kiln is controlled independently so as to bring the temperature of the gases in the inlet zone in the powder flow direction to a value lying in the range 570°C to 700°C, so as to cause the temperature to rise up to a maximum value lying in the range 730°C to 800°C which is reached in the third zone or beyond, and so as to cause the temperature to decrease progressively to the last zone into which hydrogen is fed by heating at a temperature which is sufficient to reduce higher oxides into $UO_2$.

**2.** A method according to claim 1, characterized in that nitrogen is injected concentrically between the hexafluoride and the steam, and in that the relative flow rates of the uranium hexafluoride, nitrogen, and steam are adjusted so that the reaction forming $UO_2F_2$ takes place beyond the end of a central injection nozzle for injecting the hexafluoride.

**3.** A method according to claim 1 or 2, characterized in that the kiln is subdivided into six successive zones, and in that the temperature is raised to its maximum value in the third zone in the powder flow direction.

**4.** A method according to claim 1, 2, or 3, characterized by a preliminary step of establishing a correspondence model between the temperature as measured in each zone inside the kiln, generally on the axis thereof, and the corresponding temperature against the wall of the kiln, the quantity of heat delivered by electrical resistors in the successive zones then being controlled based on the model, to servo-control the temperatures as measured against the wall to values that enable the set temperature profile in the kiln to be complied with.

**5.** A method according to claim 1 or 2, characterized in that a temperature profile is maintained in said zones such that $UO_2F_2$ is transformed into $UO_3$ not later than the outlet from the second zone starting from the reactor.

**6.** Apparatus for converting uranium hexafluoride directly into uranium oxide, comprising, in succession:

- a reactor provided with injection means for injecting $UF_6$, steam, and nitrogen so as to cause $UO_2F_2$ to be formed by hydrolysis; and
- a rotary tubular pyrohydrolysis kiln for transforming $UO_2F_2$ into uranium oxide, the kiln being provided with heater means;

   characterized in that the kiln is constituted by at least five successive zones provided with independent heater means, enabling the zones of the kiln to be maintained at different temperatures, measurement means for measuring the temperature in each zone, and temperature servo-control means operating by controlling the heater means.

**7.** Apparatus according to claim 6, characterized in that the injection means comprise an injector having three concentric nozzles connected respectively to inlets for $UF_6$, for nitrogen, and for steam, the nitrogen being injected between the $UF_6$ and the steam.

**8.** Apparatus according to claim 6 or 7, characterized in that the reactor (12) contains filter blocks (60) for retaining solids, connected to an outlet leading to an external processing installation.

**9.** Apparatus according to claim 8, characterized in that said filter blocks (60) are provided with means for alternate unclogging by a counterflow of nitrogen.

**10.** Apparatus according to claim 8 or 9, characterized in that safety filters (66) are interposed between the filters (60) placed in the reactor and the gas processing installation.

**11.** Apparatus according to claim 10, characterized by means for measuring the pressure upstream and downstream from the safety filters, connected to means for detecting damage to the filters contained in the reactor.

**12.** Apparatus according to any one of claims 7 to 11, characterized in that the reactor is placed in a case (26) for heat insulation and in that fan means (30) are provided for circulating air within the space between the wall of the reactor and the wall of the case and over heater resistors (28) for controlling the temperature of the reactor.

**13.** Apparatus according to claim 12, characterized in that the barrel of the kiln is provided with heater means constituted by heater resistors (82) that are insertable and removable through the heat insulation by moving them transversely to the axis of the kiln, e.g. placed above and below the barrel.

**14.** Apparatus according to any one of claims 6 to 12, characterized in that the reactor and means for conditioning the oxide powder are mounted on means that enable them to be moved along the axis of the kiln and are connected to the kiln via sealing means including seals that are accessible after the reactor or the conditioning means have been displaced.

**Patentansprüche**

**1.** Verfahren zur direkten Umwandlung von Uranhexafluorid in Uranoxid, wobei Uranhexafluorid $UF_6$ sowie Wasserdampf in einen Reaktor eingespritzt werden und das entstehende $UO_2F_2$-Pulver das Innere eines mit Heizmitteln ausgestatteten Röhrenofens über dessen gesamte Länge hinweg im Gegenstrom zu zugeführtem Wasserdampf und Wasserstoff passiert, wobei das Ausmaß der in wengistens fünf aufeinanderfolgenden Zonen des Ofens jeweils zugeführten Wärme derart eigenständig geregelt wird, daß die Temperatur des Gases in einer bezogen auf die Zirkulationsrichtung des Pulvers den Einlaß bildenden Zone einen Wert zwischen 570°C und 700°C erreicht, in der dritten oder einer darauffolgenden Zone ein Temperaturanstieg bis zu einem Maximalwert zwischen 730°C und 800°C erfolgt und sodann eine progressive Temperaturabnahme bis zur letzten Zone hin eintritt, in der der Wasserstoff zugeführt und dabei auf eine Temperatur erwärmt wird, die zur Reduktion der höheren Oxide zu $UO_2$ ausreicht.

**2.** Verfahren nach Anspruch 1, dadurch gekennzeichnet, daß zwischen dem Hexafluorid und dem Wasserdampf Stickstoff konzentrisch eingeblasen wird und daß eine Einstellung der jeweiligen Menge an Uranhexafluorid, Stickstoff und Wasserdampf in einer Weise erfolgt, daß die Reaktion zur Bildung von $UO_2F_2$ außerhalb des Endes einer zentralen Hexafluorid-Einspritzdüse abläuft.

**3.** Verfahren nach Anspruch 1 oder 2, dadurch gekennzeichnet, daß der Ofen in sechs aufeinanderfolgende Zonen unterteilt ist und die Temperatur in der in Zirkulationsrichtung des Pulvers dritten Zone ihren Maximalwert erreicht.

**4.** Verfahren nach Anspruch 1, 2 oder 3, gekennzeichnet durch einen vorbereitenden Verfahrensschritt, bei dem ein Modell erstellt wird, das das Verhältnis zwischen der in jeder Zone im Inneren des Ofens im wesentlichen an der Mittellinie gemessenen Temperatur und der entsprechenden Temperatur an der Ofenwand angibt, wobei ausgehend von diesem Modell die durch elektrische Widerstände erzeugte Wärme in den aufeinanderfolgenden Zonen sodann derart geregelt wird, daß die an der Wand gemessenen Temperaturen Werte aufweisen, die eine Einhaltung des gewünschten Temperaturprofils im Ofen ermöglichen.

**5.** Verfahren nach Anspruch 1 oder 2, dadurch gekennzeichnet, daß in den genannten Zonen ein Temperaturprofil aufrechterhalten wird, bei dem das $UO_2F_2$ spätestens am Ausgang der zweiten Zone nach dem Reaktor in $UO_3$ umgewandelt wird.

**6.** Vorrichtung zur direkten Umwandlung von Uranhexafluorid in Uranoxid, enthaltend die folgenden, in der genannten Reihenfolge angeordneten Bestandteile:

- einen mit Mitteln zur Zuführung von $UF_6$, Wasserdampf und Stickstoff ausgerüsteten Reaktor zur Bildung von $UO_2F_2$ durch Hydrolyse sowie

- einen mit Heizmitteln ausgerüsteten Pyrohydrolyse-Drehrohrofen zur Umwandlung von $UO_2F_2$ in Uranoxid,

dadurch gekennzeichnet, daß der Ofen aus wenigstens fünf aufeinanderfolgenden Zonen besteht, die mit voneinander unabhängigen Heizmitteln ausgerüstet sind, welche eine Aufrechterhaltung unterschiedlicher Temperaturen in den einzelnen Ofenzonen ermöglichen, und daß der Ofen Mittel zur Messung der Temperatur in den einzelnen Zonen sowie Mittel zur Temperaturregelung durch Steuerung der Heizmittel umfaßt.

7. Vorrichtung nach Anspruch 6, dadurch gekennzeichnet, daß die Zuführmittel ein Einspritzelement mit drei konzentrischen Einspritzdüsen enthalten, von denen jeweils eine an eine $UF_6$-, eine Stickstoff- und eine Wasserdampf-Zuführung angeschlossen ist, wobei der Stickstoff zwischen dem $UF_6$ und dem Wasserdampf eingespritzt wird.

8. Vorrichtung nach Anspruch 6 oder 7, dadurch gekennzeichnet, daß der Reaktor (12) Filterblöcke (60) umfaßt, welche Feststoffe zurückhalten und mit einem zu einer externen Verarbeitungsanlage führenden Auslaß verbunden sind.

9. Vorrichtung nach Anspruch 8, dadurch gekennzeichnet, daß die Filterblöcke (60) mit Mitteln versehen sind, die eine abwechselnde Reinigung der Filterblöcke mit Hilfe von im Gegenstrom hindurchgeleitetem Stickstoff ermöglichen.

10. Vorrichtung nach Anspruch 8 oder 9, dadurch gekennzeichnet, daß zwischen den im Reaktor angeordneten Filterblöcken (60) und der Einrichtung zur Gasverarbeitung Sicherheitsfilter (66) vorgesehen sind.

11. Vorrichtung nach Anspruch 10, gekennzeichnet durch Mittel zur Druckmessung, die in Fließrichtung vor und hinter den Sicherheitsfiltern angeordnet und mit Mitteln zur Feststellung einer Beschädigung der im Reaktor enthaltenen Filter verbunden sind.

12. Vorrichtung nach einem der Ansprüche 7 bis 11, dadurch gekennzeichnet, daß der Reaktor in einem wärmedämmenden Behälter (26) untergebracht ist und daß Entlüftungsmittel (30) vorgesehen sind, die bewirken, daß die Luft in dem Raum zwischen der Reaktorwand und der Behälterwand und über den der Temperaturregelung im Reaktor dienenden Heizwiderständen (28) zirkuliert.

13. Vorrichtung nach Anspruch 12, dadurch gekennzeichnet, daß der Ofenschacht mit Heizmitteln in Form von Heizwiderständen (82) ausgerüstet ist, welche durch die Wärmedämmung hindurch durch eine Verschiebung quer zur Ofenachse eingesetzt bzw. entfernt werden können und beispielsweise oberhalb und unterhalb des Schachtes angeordnet sind.

14. Vorrichtung nach einem der Ansprüche 6 bis 12, dadurch gekennzeichnet, daß der Reaktor zusammen mit Mitteln zur Weiterverarbeitung des Oxidpulvers auf Mitteln montiert ist, die eine Verschiebung des Reaktors und der Weiterverarbeitungsmittel entlang der Ofenachse ermöglichen, wobei diese Verschiebemittel mit dem Ofen durch Dichtungsmittel verbunden sind, die Verbindungselemente umfassen, welche durch eine Verschiebung des Reaktors bzw. der Weiterverarbeitungsmittel zugänglich werden.

VERS FILTRES DE SÉCURITÉ

FIG.1.

EP 0 960 070 B1

FIG.2A.

FIG.2B.

FIG.3.

FIG.4.

EP 0 960 070 B1

# FIG.5.

# FIG.6.

# FIG.7.

FIG.8.